# EUROPEAN PATENT SPECIFICATION

(11) **EP 2 848 995 B1**
(45) Date of publication and mention of the grant of the patent: **08.01.2020**
(21) Application number: 14168898.6
(22) Date of filing: 19.05.2014
(51) Int. Cl.: G03B 17/17, H04N 13/211, H04N 13/282, G03B 35/02

(54) **Multi-view image system with a single camera and a transreflective device**
Bildsystem mit Mehrfachansicht mit einer einzelnen Kamera und einer transreflektiven Vorrichtung
Système d'image multivue avec une seule caméra et un dispositif transréflectif

(30) Priority: 04.06.2013 US 201313909425
(43) Date of publication of application: 18.03.2015
(73) Proprietor: Aptiv Technologies Limited, St. Michael (BB)
(72) Inventor: Low, Yew Kwang, 738082 Singapore (SG); Yeo, Kok Wee, 530430 Singapore (SG); Yeo, Chee Keng, 575728 Singapore (SG); Taylor, Ronald M., Greentown, IN 46936 (US); Everly, Ward K., Westfield, IN 46074 (US); Shogren, William G., Noblesville, IN 46062 (US)
(74) Representative: Manitz Finsterwald Patent- und Rechtsanwaltspartnerschaft mbB

(56) References cited:
- EP-A1- 2 012 161
- WO-A1-2010/147609
- JP-A- 11 285 026
- US-A1- 2005 041 300

## Description

### TECHNICAL FIELD OF INVENTION

This disclosure generally relates to multi-view or autostereoscopic image system that uses a single camera to capture multiple views, and more particularly relates to a system that uses a transreflective device to multiplex distinct images to the single camera.

### BACKGROUND OF INVENTION

Various configurations of multi-view or autostereoscopic cameras that use only one camera have been proposed. A configuration shown in United States Patent Number 8,381,985 issued to Ferren et al. on February 26, 2013 uses a beam splitter in conjunction with shutters to multiplex distinct images to a single camera. This configuration has the undesirable attribute that the beam splitter reduce by half the intensity of light received the camera. Another configuration shown in United States Patent Number 7,181,136 to Perisic issued Feb. 20, 2007 uses mirrors to provide a split image to a single camera. This configuration has the undesirable attribute that each image (e.g. left half-image and right half-image) has half the resolutions of what would be available if the images were multiplexed to the single camera. Document JP 11285026A discloses an image pickup device and a photographed image storage method. Document US2005/041300A1 discloses a multifocal lens system for digital cameras.

### SUMMARY OF THE INVENTION

In accordance with one embodiment, a multi-view image system is provided as defined in independent claim 1. The system includes a single camera and a transreflective device. The single camera is configured to capture an image. The transreflective device is operable to a transparent-state where light passes through the transreflective device to provide the camera a first image of an area from a first perspective. The transreflective device is also operable to a reflective-state where light is reflected by the transreflective device to provide the camera a second image of the area from a second perspective distinct from the first perspective.

In an embodiment, the system also includes a mirror arrangement configured to cooperate with the transreflective device to provide the camera the first image when the transreflective device is in the transparent-state, and the second image when the transreflective device in in the reflective-state. The system may be configured such that the camera receives the first image during a first time period, and receives a second image during a second time period distinct from the first time period. The transreflective device may comprise an electrically switchable transreflective mirror (ESTM). The transreflective device may comprise a microshutter array. The system may be configured such that the first image and the second image cooperate to form an autostereoscopic image of the area. The system may be configured such that the first image and the second image cooperate to form a panoramic image of the area. The system may comprise a plurality of transreflective devices configured to provide the camera a third image of the area from a third perspective distinct from the first perspective and the second perspective.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a multi-view image system in accordance with one embodiment; and
Fig. 2 is a diagram of a multi-view image system in accordance with one embodiment.

### DESCRIPTION OF THE PREFERRED EMBODIMENT

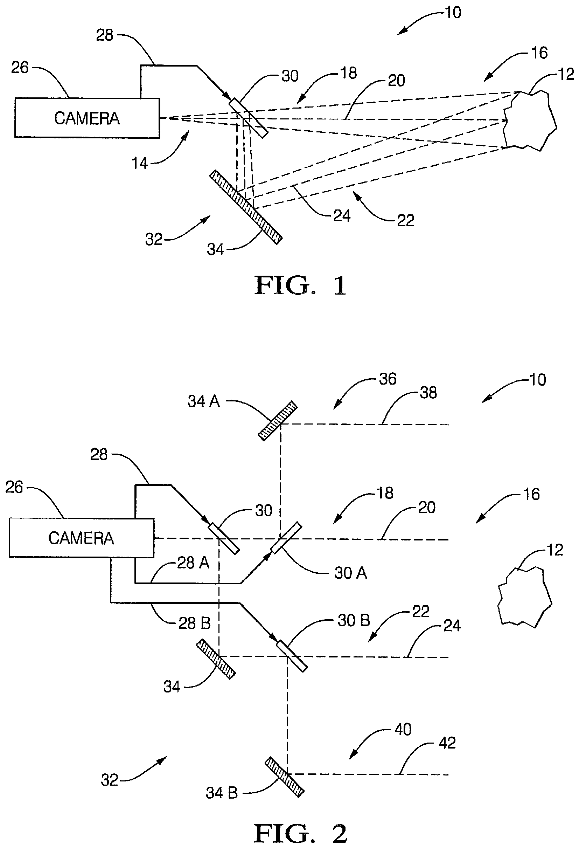

Fig. 1 illustrates a non-limiting example of a multi-view image system, hereafter the system 10. In this non-limiting example the system 10 is configured to capture (i.e. take or store) an autostereoscopic image 14 of an object 12 located in an area 16. In order to capture the autostereoscopic image 14, the system 10 captures a first image 18 of the object 12 from a first perspective 20, and captures a second image 22 of the object 12 from a second perspective 24 that is distinct from the first perspective 20, as will be recognized by those skilled in the art.

An advantageous feature of the system 10 is that only a single camera, hereafter the camera 26, is necessary for the system 10 to capture multiple views of the area 16. In general, the camera 26 is configured to capture a series of distinct images that include, but are not limited to, the first image 18 from the first perspective 20, and the second image 22 from the second perspective 24. As will become apparent in the description that follows, the system 10 multiplexes distinct images of the area 16 from distinct perspectives. As used herein and in accordance with this example, multiplexed images are characterized by the fact that the camera receives the first image 18 during a first time period, and receives a second image 22 during a second time period distinct from the first time period. In other words, the first image 18 and the second image 22 are alternated so the camera 26 receives one or the other. As such, multiple cameras are not required thereby reducing the cost of the system 10. Furthermore, since the images are multiplexed to the camera 26, each image captured by the camera 26 may be captured using the full resolution capability of the camera 26.

The system 10 also includes a transreflective device 30 that is generally configured to be operable to a transparent-state where the light of the images passes through the transreflective device 30, and operable to a reflective-state where light is reflected by the transreflective device 30. In the example illustrated in Fig. 1, the transreflective device 30 is operated to the transparent-state to provide the camera 26 with the first image 18 of the area 16 from the first perspective 20, and operated to a reflective-state to provide the camera 26 the second image 22 of the area 16 from the second perspective 24.

In one embodiment, the function of the transreflective device 30 may be provided by an electrically switchable transreflective mirror (ESTM) available from Kent Optronics, Inc. located in Hopewell Junction, New York, USA. Alternatively, the function of the transreflective device 30 may be provided by a microshutter array that is described in a paper entitled MAGNETICALLY ACTUATED MICROSHUTTER ARRAYS by Mott et al., published in the Proceedings of Society for Optics and Photonics (SPIE) Vol. 4561 (2001), or United States Patent Number 8,218,220 to Dodds et al, issued July 10, 2012. Such microshutter array may include a metalized surface such as aluminum deposited using known deposition processes commonly used for integrated circuit manufacturing.

The camera 26 may include a processor (not shown) such as a microprocessor or other control circuitry as should be evident to those in the art. The processor may include memory, including non-volatile memory, such as electrically erasable programmable read-only memory (EEPROM) for storing one or more routines, thresholds and captured images. The one or more routines may be executed by the processor to perform steps to output a control signal 28 for controlling the transreflective device 30, and processing images received by the camera 26. For example, the processor may determine a three-dimensional (3D) location of the object 12 as part of an object detection activity, or for rendering a birds-eye view of the area 16.

Fig. 1 illustrates a configuration of the system 10 useful to form the autostereoscopic image 14 of a portion of the area 16 where the first image 18 and the second image 22 cooperate to form an autostereoscopic image 14. Instead of the first perspective 20 and the second perspective 24 converging on the object 12, the directions of the first perspective 20 and the second perspective 24 may diverge so the first image 18 and the second image 22 do not substantially overlap such that the first image 18 and the second image 22 cooperate to form a panoramic image of the area 16. It is recognized that such a configuration may preclude the camera 26 from viewing any portion of the area 16 in an autostereoscopic fashion.

The system 10 may include a mirror arrangement 32 configured to cooperate with the transreflective device 30 to provide the camera 26 the first image 18 when the transreflective device 30 is in the transparent-state, and the second image 22 when the transreflective device 30 is in the reflective-state. In this non-limiting example, the mirror arrangement 32 constitutes a mirror 34. It is contemplated that the mirror 34 is fixed, but could be replaced with a movable mirror (not shown) so that the distance from the camera 26 to where the center lines indicated by the first perspective 20 and the second perspective 24 intersect could be varied. It is also contemplated that the angle of the mirror 34 could be fixed so that the system 10 always takes panoramic image of the area 16. It is also contemplated that the mirror arrangement 32 may include additional mirrors configured to equalize the optical path length from the camera 26 to the object 12 for the first image 18 and the second image 22, for example. It is noted that without the mirror arrangement 32, the system 10 may still be useful to capture images where the second perspective 24 is oriented at right angles to the first perspective 20.

It is also contemplated that the transreflective device 30 and the mirror arrangement 32 could be integrated within the camera between the camera's imager and lens. The size of the devices would be proportionately smaller with the placement within the camera and could be advantageous from a cost integration perspective.

Fig. 2 illustrates another non-limiting example of the system 10 that includes a plurality of transreflective devices, including the transreflective device 30, a second transreflective device 30A operated by a second control signal 28A, and a third transreflective device 30B operated by a third control signal 28B. The system 10 may further include mirrors 34A and 34B in addition to the mirror 34. Such a configuration provides the camera 26 a third image 36 of the area 16 from a third perspective 38 distinct from the first perspective 20 and the second perspective 24, and/or a fourth image 40 of the area 16 from a fourth perspective 42 distinct from the first perspective 20, the second perspective 24, and the third perspective 38.

In general, the transreflective devices are operated so only one of the images (the first image 18, the second image 22, the third image 36, and the fourth image 40) is received by the camera 26 at any given time). The mirror arrangement 32 may be configured so that various combinations of the images can be paired to form autostereoscopic images. For example the third image 36 and the fourth image 40 may be used to more accurately estimate a distance from the camera 26 to the object 12 as the spacing of the third perspective 38 and the fourth perspective 42 is the greatest for this non-limiting example. Alternatively, the mirror arrangement 32 may be such that the various perspectives (the first perspective 20, the second perspective 24, the third perspective 38, and the fourth perspective 42 may be oriented to provide a panaoramic view of the area 16, including a view behind the camera 26, i.e. - a direction opposites of the direction to the object 12. The advantage of using transreflective devices instead of beam splitters and shutters is particularly apparent for this example as an image would be greatly reduced if the image encountered two beam splitters before reaching the camera 26.

Accordingly, a multi-view image system (the system 10) is provided. Such a system may be particularly useful on a vehicle for detecting objects in an area proximate to the vehicle, especially since the cost of such features on a vehicle are highly scrutinized. For example, the autostereoscopic capability of the system 10 can be used to estimate the distance to an object in front of or behind a vehicle in order to warn the operator of the vehicle, or automatically apply the brakes of the vehicle, for example. The system may also be useful for synthesizing a 'birds-eye' view of the area surrounding the vehicle. The system 10 may also be used inside the vehicle to detect in three dimensions gestures made by the operator or occupants of the vehicle for controlling devices of the vehicle. Non-vehicle applications include gesture recognition by personal computing devices such as smart phones, tablets, personal computers, security systems, and the like.

## Claims

1. A multi-view image system (10) comprising:
a single camera (26) configured to capture an image; and
a transreflective device (30) operable to a transparent-state where light passes through the transreflective device (30) to provide the camera (26) a first image (18) of an area (16) from a first perspective (20), and operable to a reflective-state where light is reflected by the transreflective device (30) to provide the camera (26) a second image (22) of the area (16) from a second perspective (24) distinct from the first perspective (20), wherein the transreflective device (30) comprises an electrically switchable transreflective mirror (34) (ESTM) or a microshutter array.

2. System (10) in accordance with claim 1, wherein the system (10) further comprises a mirror arrangement (32) configured to cooperate with the transreflective device (30) to provide the camera (26) the first image (18) when the transreflective device (30) is in the transparent-state, and the second image (22) when the transreflective device (30) in in the reflective-state.

3. System (10) according to any one of the preceding claims, wherein the system (10) is configured such that the camera (26) receives the first image (18) during a first time period, and receives a second image (22) during a second time period distinct from the first time period.

4. System (10) according to any one of the preceding claims, wherein the system (10) is configured such that the first image (18) and the second image (22) cooperate to form an autostereoscopic image (14) of the area (16).

5. System (10) according to any one of the preceding claims, wherein the system (10) is configured such that the first image (18) and the second image (22) cooperate to form a panoramic image of the area (16).

6. System (10) according to any one of the preceding claims, wherein the system (10) comprises a plurality of transreflective devices configured to provide the camera (26) a third image (36) of the area (16) from a third perspective (38) distinct from the first perspective (20) and the second perspective (24).

## Patentansprüche

1. Bildsystem (10) mit mehreren Ansichten, das umfasst:
eine einzige Kamera (26), die ausgestaltet ist, um ein Bild aufzunehmen; und
eine transreflexive Vorrichtung (30), die in einem transparenten Zustand betrieben werden kann, bei dem Licht durch die transreflexive Vorrichtung (30) hindurch geht, um für die Kamera (26) ein erstes Bild (18) eines Gebiets (16) aus einer ersten Perspektive (20) bereitzustellen, und die in einem reflektierenden Zustand betrieben werden kann, bei dem Licht von der transreflexiven Vorrichtung (30) reflektiert wird, um für die Kamera (26) ein zweites Bild (22) des Gebiets (16) aus einer zweiten Perspektive (24) bereitzustellen, die sich von der ersten Perspektive (20) unterscheidet, wobei die transreflexive Vorrichtung (30) einen elektrisch schaltbaren transreflexiven Spiegel (34) (ESTM) oder eine Mikroverschlussmatrix umfasst.

2. System (10) nach Anspruch 1, wobei das System (10) ferner eine Spiegelanordnung (32) umfasst, die ausgestaltet ist, um mit der transreflexiven Vorrichtung (30) zusammen zu arbeiten, um für die Kamera (26) das erste Bild (18) bereitzustellen, wenn sich die transreflexive Vorrichtung (30) in dem transparenten Zustand befindet, und das zweite Bild (22) bereitzustellen, wenn sich die transreflexive Vorrichtung (30) in dem reflektierenden Zustand befindet.

3. System (10) nach einem der vorstehenden Ansprüche, wobei das System (10) derart ausgestaltet ist, dass die Kamera (26) das erste Bild (18) während einer ersten Zeitspanne empfängt und ein zweites Bild (22) während einer zweiten Zeitspanne empfängt, die sich von der ersten Zeitspanne unterscheidet.

4. System (10) nach einem der vorstehenden Ansprüche, wobei das System (10) derart ausgestaltet ist, dass das erste Bild (18) und das zweite Bild (22) zusammenarbeiten, um ein autostereoskopisches Bild (14) des Gebiets (16) auszubilden.

5. System (10) nach einem der vorstehenden Ansprüche, wobei das System (10) derart ausgestaltet ist, dass das erste Bild (18) und das zweite Bild (22) zusammenarbeiten, um ein Panoramabild des Gebiets (16) auszubilden.

6. System (10) nach einem der vorstehenden Ansprüche, wobei das System (10) eine Vielzahl transreflexiver Vorrichtungen umfasst, die ausgestaltet sind, um für die Kamera (26) ein drittes Bild (36) des Gebiets (16) aus einer dritten Perspektive (38) bereitzustellen, die sich von der ersten Perspektive (20) und der zweiten Perspektive (24) unterscheidet.

## Revendications

1. Système d'imagerie à vues multiples (10) comprenant :
une caméra unique (26) configurée pour capturer une image ; et
un dispositif transréflectif (30) pouvant être mis dans un état transparent dans lequel la lumière traverse le dispositif transréflectif (30) pour fournir à la caméra (26) une première image (18) d'une zone (16) depuis une première perspective (20), et pouvant être mis dans un état réfléchissant dans lequel la lumière est réfléchie par le dispositif transréflectif (30) pour fournir à la caméra (26) une deuxième image (22) de la zone (16) depuis une deuxième perspective (24) distincte de la première perspective (20), le dispositif transréflectif (30) comprenant un miroir transréflectif à commutation électrique (34) (ESTM) ou un réseau de micro -obturateurs.

2. Système (10) selon la revendication 1, dans lequel le système (10) comprend en outre un agencement de miroir (32) configuré pour coopérer avec le dispositif transréflectif (30) pour fournir à la caméra (26) la première image (18) lorsque le dispositif transréflectif (30) est dans l'état transparent et la deuxième image (22) lorsque le dispositif transréflectif (30) est dans l'état réfléchissant.

3. Système (10) selon l'une quelconque des revendications précédentes, dans lequel le système (10) est configuré de telle sorte que la caméra (26) reçoit la première image (18) pendant une première période de temps et reçoit une deuxième image (22) pendant une deuxième période de temps distincte de la première période de temps.

4. Système (10) selon l'une quelconque des revendications précédentes, dans lequel le système (10) est configuré de telle sorte que la première image (18) et la deuxième image (22) coopèrent pour former une image autostéréoscopique (14) de la zone (16).

5. Système (10) selon l'une quelconque des revendications précédentes, dans lequel le système (10) est configuré de telle sorte que la première image (18) et la deuxième image (22) coopèrent pour former une image panoramique de la zone (16).

6. Système (10) selon l'une quelconque des revendications précédentes, dans lequel le système (10) comprend une pluralité de dispositifs transréflectifs configurés pour fournir à la caméra (26) une troisième image (36) de la zone (16) depuis une troisième perspective (38) distincte de la première perspective (20) et de la deuxième perspective (24).
